(19) Europäisches Patentamt / European Patent Office / Office européen des brevets

(11) **EP 3 622 776 B1**

(12) **EUROPEAN PATENT SPECIFICATION**

(45) Date of publication and mention
of the grant of the patent:
**28.01.2026 Bulletin 2026/05**

(21) Application number: **17821538.0**

(22) Date of filing: **13.12.2017**

(51) International Patent Classification (IPC):
**H04W 76/00** *(2018.01)* **H04W 28/16** *(2009.01)*
**H04W 4/40** *(2018.01)* **H04W 92/18** *(2009.01)*

(52) Cooperative Patent Classification (CPC):
**H04W 76/00; H04W 28/16;** H04W 4/40;
H04W 92/18

(86) International application number:
**PCT/EP2017/082688**

(87) International publication number:
**WO 2018/219485 (06.12.2018 Gazette 2018/49)**

(54) **CLOUD SERVER FOR SIDELINK RADIO INTERFACE CONFIGURATION AND BASE STATION**

CLOUD-SERVER FÜR DIE KONFIGURATION DER SIDELINK-FUNKSCHNITTSTELLE UND BASE STATION

SERVEUR EN NUAGE POUR LA CONFIGURATION DE L'INTERFACE RADIO SIDELINK ET STATION DE BASE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2017 PCT/EP2017/063050**

(43) Date of publication of application:
**18.03.2020 Bulletin 2020/12**

(73) Proprietor: **Huawei Technologies Co., Ltd.
Shenzhen, Guangdong 518129 (CN)**

(72) Inventors:
• **AYAZ, Serkan**
  **80992 Munich (DE)**
• **MEDINA, Daniel**
  **80992 Munich (DE)**
• **KESHAVAMURTHY, Prajwal**
  **80992 Munich (DE)**
• **ZHOU, Chan**
  **80992 Munich (DE)**

(74) Representative: **MERH-IP Matias Erny Reichl
Hoffmann
Patentanwälte PartG mbB
Paul-Heyse-Straße 29
80336 München (DE)**

(56) References cited:
**WO-A1-2016/122162    WO-A1-2017/052690**

• "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 3GPP STANDARD ; TECHNICAL SPECIFICATION ; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.2.0, 23 March 2017 (2017-03-23), pages 1 - 334, XP051291440, [retrieved on 20170323]
• "3rd Generation Partnership Project; Technical Specification Group Radio Access Network; Evolved Universal Terrestrial Radio Access (E-UTRA); Radio Resource Control (RRC); Protocol specification (Release 14)", 3GPP STANDARD ; TECHNICAL SPECIFICATION ; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.2.2, 20 April 2017 (2017-04-20), pages 1 - 721, XP051298184, [retrieved on 20170420]

- "3 Generation Partnership Project; Technical Specification Group Radio Access Network; Evolved Universal Terrestrial Radio Access (E-UTRA); Services provided by the physical layer (Release 14)", 3GPP STANDARD ; TECHNICAL SPECIFICATION ; 3GPP TS 36.302, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.2.0, 22 March 2017 (2017-03-22), pages 1 - 29, XP051291356, [retrieved on 20170322]

- MICHAEL BRENNER ET AL: "The Open Mobile Alliance", 1 January 2008 (2008-01-01), New York, XP055443623, ISBN: 978-0-470-51918-9, Retrieved from the Internet <URL:https://metis-ii.5g-ppp.eu/wp-content/uploads/deliverables/METIS-II_D6.2_V1.0.pdf> [retrieved on 20180123]

## Description

### TECHNICAL FIELD

In general, the present invention relates to the field of wireless communication. In particular, the invention relates to a network entity and a base station for PLMN operator independent management of V2X sidelink communication.

### BACKGROUND

In 3GPP (3rd Generation Partnership Project) cellular networks - such as LTE (Long Term Evolution) or 5G - supporting V2X (Vehicle-to-Everything) sidelink communication, sidelink (SL) radio resources are generally controlled by a Public Land Mobile Network (PLMN) operator. User equipments (UEs) belonging to different PLMN operators are assumed to transmit using different spectral bands (i.e., different carrier frequencies). However, this precludes the possibility of spectrum sharing among operators. For some safety-of-life applications, the future spectrum allocation for V2X sidelink communication may not belong to a specific operator, but rather be shared by multiple operators.

There are two modes of operation for V2X communication in 3GPP Rel-14, namely over the PCS (sidelink) interface and over the LTE-Uu (uplink/downlink) interface. In the sidelink mode of operation, which is referred to as V2X sidelink communication, the user equipments (UEs) can communicate with each other directly over the PCS interface.

Generally, a UE supporting V2X sidelink communication can operate in two modes for resource allocation.

In the first resource allocation mode, which is referred to as *scheduled resource allocation* or *sidelink transmission mode 3,* the UE requests transmission resources from a base station (BS), and the BS schedules dedicated resources to the UE for transmission of sidelink control information (SCI) and sidelink user data.

In the second resource allocation mode, which is referred to as *UE autonomous resource selection* or *sidelink transmission mode 4,* the UE on its own selects resources from resource pools to transmit SCI and data.

In order to prevent interference among V2X sidelink transmissions in the second operation mode, 3GPP Radio Resource Control (RRC) specifications introduce two features in Release 14, namely "zones" and "sensing". The world is divided into geographical zones. A zone is a periodically repeating geographic region. The UE selects a radio resource pool based on the zone it is located in. Based on channel sensing within the selected radio resource pool, the UE selects specific sidelink radio resources for transmission and may reserve periodically recurring (i.e., semi-persistent) sidelink radio resources.

Different operators use different V2X sidelink configurations (e.g., radio resource pools, zones, etc.) specified in *sl-V2X-ConfigCommon, sl-V2X-ConfigDedicated,* etc. If UEs belonging to different operators transmit on the same carrier frequency without a common configuration, then UEs in different zones may select the same resource pool, leading to inter-zone interference.

In the scheduled resource allocation mode, the sidelink scheduler at the BS uses UE geographical location information (e.g., obtained from periodic position reports) to ensure orthogonal time/frequency resources are allocated to nearby UEs, thus preventing interference. Each operator, however, has its own sidelink scheduler, and is unaware of UEs belonging to other operators (including their geographical location). If nearby UEs belonging to different operators transmit on the same carrier frequency, the operator-centric sidelink schedulers won't be able to prevent interference.

Thus, there is a need for improved devices and methods for managing V2X sidelink communication in a PLMN operator independent manner.

Document WO 2017/052690 A1 generally discloses methods and apparatus for communicating in a wireless network supporting V2X communication including a terminal comprising: transceiver circuitry to communicate via uplink and downlink radio interface with a radio access network of a wireless communication network and communicate directly via sidelink radio interface with one or more out of a vehicle terminal and/or a roadside unit; and control circuitry coupled to the transceiver circuitry to determine one or more indicator related to the apparatus and/or surrounding environment and control the transceiver circuitry to control communication over the sidelink radio interface based on the determined one or more indicator to control congestion on V2X spectrum resources.

### SUMMARY

It is an object of the invention to provide an improved network device and an improved base station for managing V2X sidelink communication in a PLMN operator independent manner.

The foregoing and other objects are achieved by the subject matter of the independent claims. Further implementation forms are apparent from the dependent claims, the description and the figures. The embodiments are defined in the dependent claims

Generally, embodiments of the invention are based on the idea of moving the intelligence (control of sidelink radio resources, including sidelink scheduling) from the operator's radio access network (RAN) to a network entity accessible by different operators, while keeping the standard interface (RRC/MAC/PHY control signaling messages) between a base station (BS) and a user equipment (UE) unmodified, so as to have no impact on the UE architecture. The UE is thus unaware that the sidelink radio resources are being controlled by a network entity located, for instance, in the cloud and not in the operator's RAN. In embodiments of the invention, a network entity, in particular a cloud server, communicates with an operator's BS via a new interface to control the configuration parameters of the BS for V2X sidelink communication. The BS and UE exchange control signaling related to V2X sidelink communication as usual via the standard interface specified by 3GPP. Thus, the UE is unaware that sidelink radio resources are controlled from outside the RAN. A key advantage provided by embodiments of the invention is that no changes to the current 3GPP Rel-14 UE architecture are required, thus having no impact on the UE.

More specifically, according to a first aspect, the invention relates to a network entity, in particular a cloud server, comprising a processor being configured to control radio resources, on behalf of one or more, in particular two, mobile networks (PLMNs). A cloud server in the meaning of the invention is an entity that is configured to communicate with entities of a PLMN, but may or may not be itself part of a PLMN, i.e., it may or may not be related to a PLMN ID. A PLMN is a Public Land Mobile Network, which is run by a certain operator. In particular, a PLMN can be identified by a PLMN ID, wherein the PLMN ID can be a unique identifier of the PLMN in a relevant area.

The processor is configured to control radio resources fo sidelink transmission by a first UE of a first PLMN and/or a second UE of a second PLMN.

Additionally or alternatively, the processor is configured to perform dynamic and/or semi-persistent scheduling of sidelink transmissions by allocating one or more sidelink radio resources to a first UE of the first PLMN and/or to a second UE of the second PLMN. In the claimed invention, the processor is configured to set the value of one or more sidelink radio interface configuration parameters for the first UE of the first PLMN and/or for the second UE of the second PLMN.

In the claimed invention, the radio resources are located on a same carrier.

In the claimed invention, the network entity further comprises a communication interface for communication with a first base station (BS) of the first PLMN and/or a second BS of the second PLMN.

In a further implementation form of the first aspect, the communication interface is configured to transmit scheduling information to the first BS, wherein the scheduling information specifies one or more sidelink radio resources allocated to the first UE for transmission of sidelink control information and/or sidelink user data; and/or transmit scheduling information to the second BS, wherein the scheduling information specifies one or more sidelink radio resources allocated to the second UE for transmission of sidelink control information and/or sidelink user data.

In case the network entity is configured to transmit scheduling information to the first and to the second BS, this scheduling information need not be the same scheduling information.

In a further implementation form of the first aspect, the scheduling information comprises one or more of the following:

- a carrier indicator;
- a location of the one or more sidelink radio resources in the time domain;
- a location of the one or more sidelink radio resources in the frequency domain;
- a retransmission related parameter;
- a semi-persistent scheduling (SPS) related parameter.

In the claimed invention, the communication interface is configured to transmit the one or more sidelink radio interface configuration parameters for the first UE to the first BS; and/or transmit the one or more sidelink radio interface configuration parameters for the second UE to the second BS.

In the claimed invention, the one or more sidelink radio interface configuration parameters comprise one or more radio resource control (RRC) parameters controlling the operation of the medium access control (MAC) layer and/or the physical (PHY) layer for sidelink communication.

In a further implementation form of the first aspect, the one or more radio resource control (RRC) parameters controlling the operation of the medium access control (MAC) layer and/or the physical (PHY) layer for sidelink communication comprise one or more of the following:

- a radio resource pool configuration parameter;
- a zone configuration parameter;
- a radio resource selection configuration parameter;
- a semi-persistent scheduling (SPS) configuration parameter;
- a measurement configuration parameter.

In a further implementation form of the first aspect, the communication interface is further configured to receive from the first BS and/or from the second BS one or more sidelink radio resource request parameters and/or one or more measurements.

In a further implementation form of the first aspect, the one or more sidelink radio resource request parameters comprise one or more of the following:

- a carrier frequency for transmitting and/or receiving by a UE;
- a destination ID;
- a parameter for semi-persistent scheduling (SPS), in particular periodicity, timing offset, priority and/or message size;

and the one or more measurements comprise one or more of the following:

- a geographic location of a UE;
- a received signal strength in one or more radio resources;
- a sidelink buffer status.

According to a first example not encompassed by the claims, the invention relates to a corresponding method for operating a network entity, in particular a cloud server, comprising the step of controlling radio resources, in particular sidelink radio resources, on behalf of one or more, in particular two, mobile networks (PLMNs).

The method according to the first example of the invention can be performed by the network entity according to the first aspect of the invention. Further features of the method according to the first example of the invention result directly from the functionality of the network entity according to the first aspect of the invention and its different implementation forms.

According to a second aspect, the invention relates to a base station (BS) of a PLMN, comprising a processor configured to process control plane information related to control of radio resources, in particular sidelink radio resources, and a communication interface configured to transmit and/or receive to/from a network entity, in particular a cloud server, said control plane information.

The communication interface is configured to transmit to the network entity one or more sidelink radio resource request parameters and/or one or more measurements.

In a further implementation form of the second aspect, the one or more sidelink radio resource request parameters comprise one or more of the following:

- a carrier frequency for transmitting and/or receiving by a UE;
- a destination ID;
- a parameter for semi-persistent scheduling (SPS), in particular periodicity, timing offset, priority and/or message size;

and the one or more measurements comprise one or more of the following:

- a geographic location of a UE;
- a received signal strength in one or more radio resources;
- a sidelink buffer status.

In the claimed invention, the communication interface is configured to receive from the network entity scheduling information, wherein the scheduling information specifies one or more sidelink radio resources allocated to a UE for transmission of sidelink control information and/or sidelink user data.

In a further implementation form of the second aspect, the scheduling information comprises one or more of the following:

- a carrier indicator;
- a location of the one or more sidelink radio resources in the time domain;
- a location of the one or more sidelink radio resources in the frequency domain;
- a retransmission related parameter;
- a semi-persistent scheduling (SPS) related parameter.

In the claimed invention, the communication interface is configured to receive from the network entity one or more sidelink radio interface configuration parameters for a UE.

In the claimed invention, the one or more sidelink radio interface configuration parameters comprise one or more radio resource control (RRC) parameters controlling the operation of the medium access control (MAC) layer and/or the physical (PHY) layer for sidelink communication.

In a further implementation form of the second aspect, the one or more radio resource control (RRC) parameters controlling the operation of the medium access control (MAC) layer and/or the physical (PHY) layer for sidelink communication comprise one or more of the following:

- a radio resource pool configuration parameter;
- a zone configuration parameter;
- a radio resource selection configuration parameter;
- a semi-persistent scheduling (SPS) configuration parameter;
- a measurement configuration parameter.

According to a second example not encompassed by the claims, the invention relates to a corresponding method for operating a base station (BS) of a PLMN, comprising a communication interface configured to transmit and/or receive to/from a network entity, in particular a cloud server, control plane information related to control of radio resources, in particular sidelink radio resources.

The method according to the second example of the invention can be performed by the base station according to the second aspect of the invention. Further features of the method according to the second example of the invention result directly from the functionality of the base station according to the third second of the invention and its different implementation forms.

According to a third example not encompassed by the claims, the invention relates to a computer program product, comprising computer executable instructions stored on a non-transitory computer-readable medium, wherein when the instructions are executed on a computer or a processor, causes the computer or the processor to perform the method of the first example or the method of the second example.

The invention can be implemented in hardware and/or software.

**BRIEF DESCRIPTION OF DRAWINGS**

Further embodiments of the invention will be described with respect to the following figures, wherein:

Fig. 1 shows a schematic diagram illustrating a V2X communication system including a network entity according to an embodiment and a base station according to an embodiment;
Fig. 2 shows adjacent PSCCH (Physical Sidelink Control Channel) and PSSCH (Physical Sidelink Shared Channel) radio resources in an exemplary grid of sidelink radio resources; and
Fig. 3 shows a schematic diagram illustrating some further aspects of the V2X communication system of figure 1.

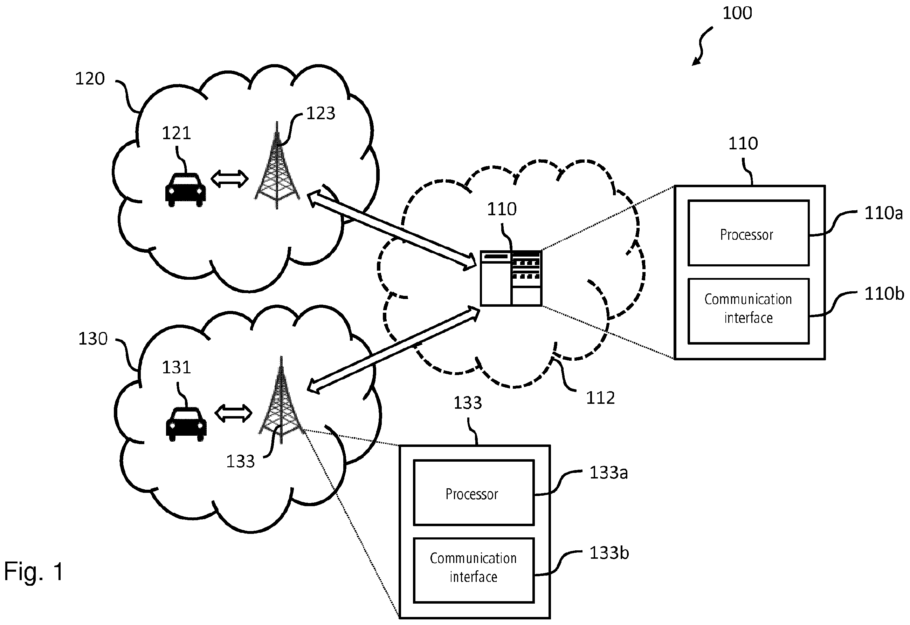

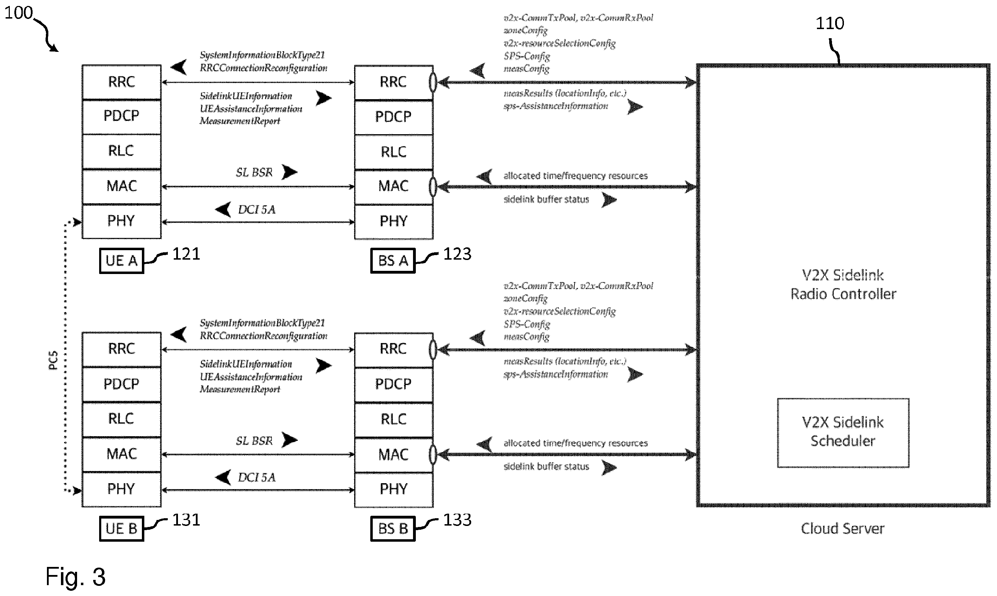

In the various figures, identical reference signs will be used for identical or at least functionally equivalent features. In the following, fig. 1 and 3 and their description are according to the claimed invention. The remaining description does not or does not fully correspond to the claimed invention but it is useful for understanding the invention.

**DESCRIPTION OF EMBODIMENTS**

In the following description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

Figure 1 illustrates a V2X communication system 100 including a network entity 110 according to an embodiment. As can be taken from the detailed view of figure 1 and as will be explained in more detail further below, the network entity 110, which in the embodiment shown in figure 1 is implemented as a single cloud server 110 located in the Internet 112, comprises a processor 110a being configured to control radio resources, in particular sidelink radio resources, on behalf of one or more mobile networks (PLMNs) 120, 130. In the embodiment shown in figure 1, the processor 110a of the cloud server 110 is configured to control sidelink radio resources for transmission by a first user equipment (UE) 121 of a first PLMN 120 and a second UE 131 of a second PLMN 130. As used herein, a PLMN is a Public Land Mobile Network, which is run by a certain operator. In particular, a PLMN can be identified by a PLMN ID, wherein the PLMN ID can be a unique identifier of the PLMN in a relevant area.

As can be taken from the detailed view shown in figure 1, the network entity 110 further comprises a communication interface 110b, which is configured to communicate with a first base station (BS) 123 of the first PLMN 120 and a second BS 133 of the second PLMN 130. Likewise, the first BS 123 and the second BS 133 each comprise a processor (e.g. the processor 133a of the BS 133 shown in figure 1) configured to process control plane information related to control of sidelink radio resources, and a communication interface (e.g. the communication interface 133b of the BS 133 shown in figure 1) configured to communicate with the network entity 110. As illustrated in the exemplary embodiment shown in figure 1, the first UE 121 and second UE 131 could be implemented as part of a respective vehicle, such as in the form of an on-board unit. As will be appreciated, however, the first UE 121 and second UE 131 could be implemented as mobile phones or other types of user equipments as well.

As will be described in more detail further below, the communication interface 133b of the respective BS 123, 133 is configured to transmit and/or receive to/from the network entity 110 control plane information related to the control of radio resources, in particular sidelink radio resources.

Before describing in more detail further embodiments of the invention, in the following some further technical background will be provided, which can be helpful for understanding different aspects of the present invention.

In an embodiment, the UEs 121, 131 supporting V2X sidelink communication can operate in two modes for resource allocation.

In the first resource allocation mode, which is referred to as *scheduled resource allocation,* the UE 121, 131 requests transmission resources from a base station 123, 133, and the base station schedules dedicated resources to the UE for transmission of sidelink control information (SCI) and sidelink user data.

In the second resource allocation mode, which is referred to as *UE autonomous resource selection,* the UE 121, 131 on its own selects resources from resource pools to transmit SCI and data. The UE 121, 131 selects a resource pool based on the zone the UE 121, 131 is located in. Based on sensing, the UE 121, 131 can select specific sidelink resources and may reserve periodically recurring (i.e., semi-persistent) sidelink resources.

The UE 121, 131 may report geographical location information to the respective base station 123, 133. The UE 121, 131 can be configured to report the complete UE geographical location information based on periodic reporting.

Geographical zones can be configured by the respective base station 123, 133 (e.g., *SystemInformationBlockType21*) or preconfigured (e.g., *SL-V2X-Preconfiguration*). When zones are configured, the world is divided into geographical zones using a single fixed reference point, zone length and zone width, from which the UE 121, 131 determines the identity of the zone it is located in.

In the following, a summary of radio resource control (RRC) related procedures for V2X sidelink communication is provided, which are relevant for embodiments of the invention.

The information element (IE) *SystemInformationBlockType21* can contain the following common configuration information related to V2X sidelink communication (i.e., *sl-V2X-ConfigCommon*): *v2x-CommTxPoolNormalCommon* (list of up to 8 transmit resource pools for normal conditions for transmission in RRC_IDLE); *v2x-CommTxPoolExceptional* (one transmit resource pool for exceptional conditions (e.g., handover)); *v2x-CommRxPool* (list of up to 16 receive resource pools); *v2x-SyncConfig* (synchronization configuration for Sidelink Synchronization Signal (SLSS) transmission); *v2x-InterFreqInfoList* (list of up to 8 possible carrier frequencies for V2X sidelink communication); *v2x-ResourceSelectionConfig* (sensing configuration for UE autonomous resource selection); and *zoneConfig* (zone configuration (length, width, etc.)).

Moreover, the *v2x-ResourceSelectionConfig* includes: *probResourceKeep* (probability with which the UE keeps the current resource at the end of a resource reselection period); *pssch-TxConfigList* (a list of up to 16 *SL-PSSCH-TxConfig* configurations, including synchronization reference type (*typeTxSync: gnss, enb, ue*); and PSSCH transmission parameters (*minMCS-PSSCH, maxMCS-PSSCH, minRB-NumberPSSCH, maxRB-NumberPSSCH, allowedRetxNumberPSSCH), restrictResourceReservationPeriodList* (list of up to 16 values allowed for the resource reservation interval), and *thresPSSCH-RSRP-List* (list of 64 threshold values used when excluding resources).

In an embodiment, the IE *SL-CommResourcePoolV2X* specifies parameters for a specific resource pool, including: *sl-Subframe* (the bitmap used to determine the subframes belonging to the resource pool); *adjacencyPSCCH-PSSCH* (whether a UE 121, 131 shall transmit PSCCH and PSSCH in adjacent physical resource blocks (PRBs)); *sizeSubchannel* (number of PRBs of each subchannel in the corresponding resource pool); *numSubchannel* (number of subchannels in the corresponding resource pool); *startRBSubchannel* (lowest PRB index of the subchannel with the lowest index); *startRB-PSCCH-Pool* (lowest PRB index of the PSCCH pool); *dataTxParameters* (parameters for sidelink power control); and *zoneID* (zone identity for which the UE 121, 131 shall use this resource pool).

When the UE 121, 131 receives *RRCConnectionReconfiguration* including *sl-V2X-ConfigDedicated,* it can perform the following dedicated configuration procedure.

If the field *commTxResources* is set to *scheduled,* the UE 121, 131 requests the base station to assign transmission resources based on sidelink Buffer Status Reports (Sidelink BSR) from the UE 121, 131. The field *commTxResources* also specifies the resource pool (*v2x-SchedulingPool*) and modulation and coding scheme (*mcs*) to be used by the UE 121, 131. Within the allocated pool, the specific resources for PSSCH transmission are determined based on the content of the SL Grant received via Downlink Control Information (DCI format 5A) on PDCCH (Physical Downlink Control Channel).

If the field *commTxResources* is set to *ue-Selected,* the UE 121, 131 transmits V2X sidelink data based on sensing using one of the resource pools indicated by *v2x-commTxPoolNormalDedicated.* The sensing configuration is specified in *v2x-CommTxPoolSensingConfig.*

In scheduled mode, if semi-persistent scheduling (SPS) is enabled, an *sl-V-SPS-RNTI* is included in the field *SPS-Config* within the IE *radioResourceConfigDedicated* sent via the *RRCConnectionReconfiguration* message. Each SL SPS configuration SPS-*ConfigSL* is specified by the following parameters: *sps-ConfigIndex* indicates the index of the SL SPS configuration; *semiPersistSchedIntervalSL* indicates the time interval between consecutive transmission opportunities (20 ms, 50 ms, 100 ms, 200 ms, 300 ms, 400 ms, 500 ms, 600 ms, 700 ms, 800 ms, 900 ms, 1000 ms).

A UEAssistanceInformation message can be used for the indication of UE assistance information to the respective base station 123, 133. This message includes sps-AssistanceInformation to assist the base station to configure SPS, e.g., by providing the traffic characteristics (periodicity, timing offset, priority, message size, etc.) of sidelink logical channel(s) (trafficPatternInfoListSL).

In an embodiment, an RRC_CONNECTED UE 121, 131 sends a SidelinkUEInformation message to the respective serving base station 123, 133 in order to request assignment of dedicated sidelink resources. The SidelinkUEInformation message can include the following information: v2x-CommRxInterestedFreq indicates the index of the frequency (in v2x-InterFreqInfoList broadcast in SystemInformationBlockType21) on which the UE is interested to receive V2X sidelink communication. The V2X sidelink communication transmission resource request (v2x-CommTxResourceReq) includes: v2x-CommTxFreq indicating the index of the frequency on which the UE is interested to transmit V2X sidelink communication (same value as indicated in v2x-CommRxInterestedFreq); and v2x-DestinationInfoList containing a list of up to 16 Destination Layer-2 IDs for V2X sidelink communication.

In an embodiment, if the respective UE 121, 131 is in coverage and has V2X sidelink data to be transmitted, it operates in one of the following ways.

If the UE 121, 131 is in RRC_CONNECTED and the field commTxResources is set to scheduled, it requests the base station to assign dedicated resources for transmission. If commTxResources is set to ue-Selected, the UE transmits based on sensing using one of the resource pools indicated by v2x-commTxPoolNormalDedicated.

If the UE 121, 131 is in RRC_IDLE, it transmits based on sensing using one of the resource pools indicated by v2x-CommTxPoolNormalCommon.

When out of coverage, the UE 121, 131 transmits V2X sidelink data based on sensing using one of the resource pools indicated by v2x-CommTxPoolList in SL-V2X-Preconfiguration.

In an embodiment, for resource pool selection, the UE 121, 131 only uses the resource pool which corresponds to its geographical coordinates, if zoneConfig is included in SystemInformationBlockType21 or in SL-V2X-Preconfiguration. The UE 121, 131 selects a pool of resources which includes a zoneID equal to the calculated zone identity.

In an embodiment, for V2X sidelink related measurement configuration and reporting, the RRCConnectionReconfiguration message is used to configure (measConfig) which measurements should be performed by the UE 121, 131 in relation to V2X sidelink communication as well as the reporting configuration (reportConfig), e.g., how often they should be reported (reportInterval) and whether location information should be included (includeLocationInfo). The MeasurementReport message includes the measurement results (measResults), e.g., the geographic location (locationInfo) of the UE 121, 131.

In the following, a summary of medium access control (MAC) layer related procedures for V2X sidelink communication is provided, which are relevant for embodiments of the invention.

According to 3GPP Rel-14 V2X sidelink communication specifications, in order to transmit on the Sidelink Shared Channel (SL-SCH), the corresponding MAC layer must have at least one SL Grant. New transmissions and retransmissions are performed on the resource indicated in the SL Grant and with the Modulation and Coding Scheme (MCS) configured by upper layers or selected by the UE 121, 131 between minMCS-PSSCH and maxMCS-PSSCH.

For scheduled resource allocation (sidelink transmission mode 3), the SL Grant can be derived from the DCI format 5A received on PDCCH from the respective base station 123, 133, containing the following information: carrier indicator; lowest index of the subchannel allocation of the initial transmission ($L_{init}$); frequency resource location of initial transmission and retransmission, indicated by a resource indication value (RIV); time gap between initial transmission and retransmission ($SF_{gap}$); SL SPS configuration index (SPS case) and activation/release indication (SPS case).

If the MAC layer is configured with at least one SL SPS configuration and the received SL Grant has been received on the PDCCH for the MAC layer's sl-V-SPS-RNTI, the MAC layer (re-)initializes the configured SL Grant and considers sequentially that the Nth grant occurs in the subframe for which:

$$(10 \cdot SFN + subframe) = [(10 \cdot SFN_{start\ time} + subframe_{start\ time}) + N \cdot semiPersistSchedIntervalSL] \text{ modulo } 10240,$$

wherein $SFN_{start\ time}$ and $subframe_{start\ time}$ correspond to the (re-)initialization time.

In an embodiment, for UE autonomous resource selection (sidelink transmission mode 4), the UE 121, 131 (re) selects PSSCH resources autonomously and semi-persistently based on channel sensing. At the end of each reselection period, the UE 121, 131 keeps the previously selected resource with a probability probResourceKeep. If the UE 121, 131 does not keep the previously selected resource, the UE: selects the number of retransmissions (0 or 1) as configured in allowedRetxNumberPSSCH; selects an amount of frequency resources (number of contiguous subchannels $L_{subCH}$ ) within the range configured by upper layers between minRB-NumberPSSCH and maxRB-NumberPSSCH; and sets the resource reservation interval $P_{rsvp\_TTX}$ to one of the allowed values configured by upper layers in restrictResourceReservationPeriod. The UE 121, 131 then randomly selects a resource and uses it to select a set of periodic resources spaced by the resource reservation interval $P_{rsvp\_TX}$.

A candidate resource is defined as a set of $L_{subCH}$ contiguous subchannels in a given subframe. Any set of $L_{subCH}$ contiguous subchannels in the PSSCH resource pool within a certain time window (so as to fulfill the latency requirement) corresponds to a candidate resource. The UE 121, 131 excludes resources for which either it has no measurement information or which are reserved by nearby UEs with an associated PSSCH-RSRP above a certain (priority-dependent) threshold. From the remaining resources, it selects randomly among the best resources in terms of S-RSSI (Sidelink Received Signal Strength Indicator).

If retransmissions are enabled, the UE 121, 131 follows the same procedure to select a set of periodic resources for retransmissions. The UE 121, 131 may also reselect a resource at any time if the data available for transmission does not fit in the selected resource.

In sidelink transmission mode 3, a sidelink buffer status reporting (Sidelink BSR) procedure can be used to provide the serving base station 123, 133 with information about the amount of SL data available for transmission.

RRC controls BSR reporting for SL by configuring the relevant timers. Each sidelink logical channel belongs to a Destination ID and is allocated to a Logical Channel Group (LCG) depending on its priority and the mapping between LCG ID and priority provided by upper layers in logicalChGroupInfoList.

For each reported group, Sidelink BSR MAC control elements consist of: destination index, LCG ID and buffer size (bytes).

In the following, a summary of physical (PHY) layer related procedures for V2X sidelink communication is provided, which are relevant for embodiments of the invention.

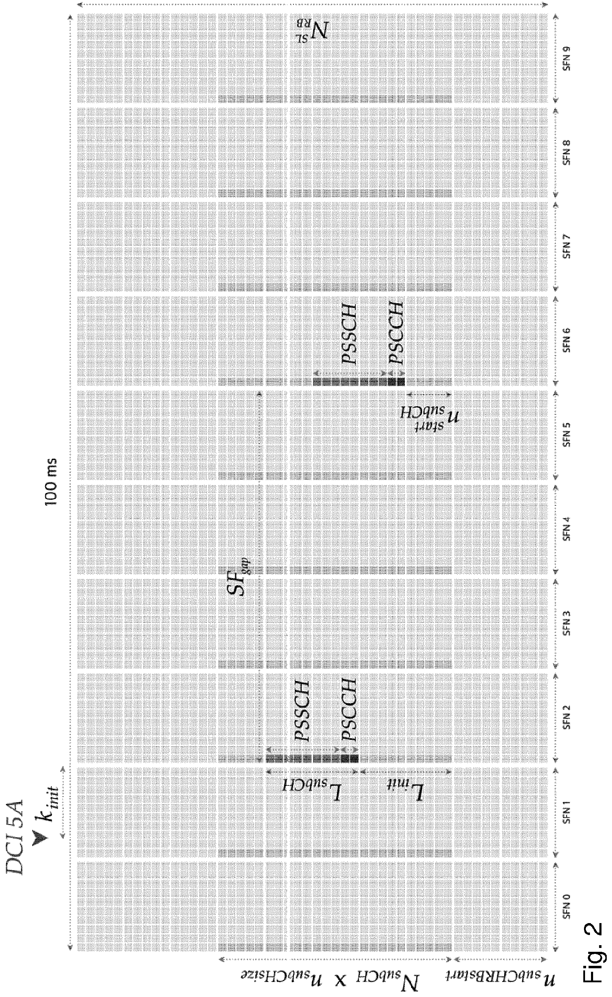

Figure 2 illustrates an example of adjacent PSCCH and PSSCH resources.

For determining a PSSCH resource pool, the set of subframes that may belong to a PSSCH resource pool is specified as part of the resource pool configuration by means of a bitmap.

The physical resource block (PRB) pool consists of $N_{subCH}$ subchannels, where $N_{subCH}$ is given by a higher layer parameter numSubchannel, where each subchannel consists of a set of $n_{subCHsize}$ contiguous PRBs (sizeSubchannel). The starting PRB number $n_{subCHRBstart}$ for the resource pool is specified by a higher layer parameter startRBSubchannel.

There are two possible ways of transmitting PSCCH: adjacent and non-adjacent to the PSSCH. Which one is used is part of the resource pool configuration, as specified by the parameters adjacencyPSCCH-PSSCH and startRBPSCCHPool.

The set of subframes and resource blocks for PSSCH transmission is determined by the resource used for the PSCCH transmission containing the associated SCI format 1, and:

frequency resource location of the initial transmission and retransmission given by a resource indication value (RIV) corresponding to a starting subchannel index ( $n_{subCH}^{start}$ ) and a length in terms of contiguously allocated subchannels ($L_{subCH} \geq 1$); and retransmission related parameters (e.g., time gap between initial transmission and retransmission field ($SF_{gap}$), retransmission index).

In sidelink transmission mode 4, the selected resource for PSSCH transmission can be semi-persistent, with a resource reservation interval $P_{rsvp\_TX}$ determined by higher layers.

SCI format 1 is transmitted in two PRBs in each subframe where the corresponding PSSCH is transmitted.

The following information is transmitted by means of SCI format 1: priority, modulation and coding scheme, resource reservation interval, frequency resource location of initial transmission and retransmission given by a resource indication value (RIV) and retransmission related parameters (e.g., time gap between initial transmission and retransmission ($SF_{gap}$), retransmission index).

Figure 3 illustrates the protocol stacks implemented in the UEs 121, 131 and the base stations 123, 133 of the V2X communication system 100 of figure 1. In the embodiment of figure 3, the network entity 110 is implemented as a cloud server 110 acting as a V2X Sidelink Radio Controller within the V2X communication system 100.

In an embodiment, the cloud server 110, the base stations 123, 133 and the UEs 121, 131 are configured to interact in the following way.

The RRC layer in a base station 123, 133 may forward to the V2X Sidelink Radio Controller, i.e., the cloud server 110, measurement results (e.g., measResults, including locationInfo) and UE assistance information (e.g., sps-AssistanceInformation specifying traffic characteristic parameters for semi-persistent scheduling) received from the UEs 121, 131.

The V2X Sidelink Radio Controller, i.e., the cloud server 110, transmits to the RRC layer of the base station 123, 133 configuration parameters for V2X sidelink communication. In an embodiment, these parameters may include: radio resource pools (v2x-CommTxPool, v2x-CommRxPool); zone configuration parameters (zoneConfig); sensing configuration parameters (v2x-resourceSelectionConfig); semi-persistent scheduling (SPS) configuration parameters (SPS-Config) and/or measurement configuration parameters (measConfig).

These parameters will be used by the respective base station 123, 133 to configure the respective UE 121, 131 (sl-V2X-ConfigCommon, sl-V2X-ConfigDedicated) via broadcast control signaling (SystemInformationBlockType21) or dedicated control signaling (RRCConnectionSetup, RRCConnectionReconfiguration).

The MAC layer in the respective base station 123, 133 may forward to the V2X Sidelink Radio Controller, i.e., the cloud server 110, sidelink buffer status information received from the respective UE 121, 131 (via Sidelink BSR MAC Control Elements). This can be used by the V2X Sidelink Scheduler of the cloud server 110 for dynamic (i.e., non-persistent) scheduling of sidelink transmissions. In case of semi-persistent scheduling (SPS), the sps-AssistanceInformation forwarded by the RRC layer of the respective base station 123, 133 can be taken into account by the V2X Sidelink Scheduler.

Based on the scheduling decision by the V2X Sidelink Scheduler, the cloud server 110 transmits the corresponding time/frequency resource allocation information to the respective base station 123, 133, including one or more of the following: the ID of the respective UE 121, 131 to which the scheduling decision applies; a carrier indicator; location of allocated resources in the time domain; location of allocated resources in the frequency domain; retransmission related parameters (e.g., time gap between initial transmission and retransmission); SPS related parameters (e.g., SL SPS configuration index, activation/release indication). The respective base station 123, 133 then uses these values to generate the SL Grant and transmits it to the corresponding UE 121, 131 via Downlink Control Information (DCI format 5A) on PDCCH (Physical Downlink Control Channel).

For synchronization purposes, the cloud server 110 and the base stations 123, 133 may utilize the UTC time (e.g., from a GNSS synchronization source) to calculate the Direct Frame Number (DFN) and subframe number, according to the procedure specified for the UE 121, 131 in Section 5.10.14 of the standard specification 3GPP TS 36.331, "LTE; Evolved Universal Terrestrial Radio Access (E-UTRA); Radio Resource Control (RRC); Protocol specification".

Since, according to embodiments of the invention, V2X sidelink configuration parameters for UEs belonging to different operators are controlled by a single entity, namely the network entity 110, the limitations of the conventional operator-centric design in a shared spectrum scenario can be overcome. More specifically, in the distributed mode (UE autonomous resource selection), inter-zone interference is prevented by having a common radio resource pool configuration and zone configuration provided by the network entity 110. In the centralized mode (scheduled resource allocation), having the network entity 110 act as a single sidelink scheduler ensures orthogonal resources are allocated to nearby UEs, regardless of the operator the UE belongs to.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless of whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto. It is therefore to be understood that within the scope of the appended claims, the invention may be practiced otherwise than as specifically described herein.

**Claims**

1. A network entity (110), in particular a cloud server (110),

   comprising a processor (110a) being configured to control radio resources, in particular sidelink radio resources, on behalf of one or more, in particular two, public land mobile networks, PLMNs (120, 130); wherein the processor (110a) is configured to:

   set a value of one or more sidelink radio interface configuration parameters for a first user equipment, UE (121) of a first PLMN (120) and/or for a second UE (131) of a second PLMN (130), wherein the one or more sidelink radio interface configuration parameters comprise one or more radio resource control, RRC, parameters controlling the operation of the medium access control, MAC, layer and/or the physical, PHY, layer for sidelink communication; and wherein the one or more RRC parameters controlling the operation of the MAC layer and/or the PHY layer for sidelink communication comprise configuration for enabling UE autonomous resource selection; wherein the network entity further comprises a communication interface (110b) for communication with a first base station, BS (123) of the first PLMN (120) and/or a second BS (133) of the second PLMN (130); wherein the communication interface (110b) is configured to:

   - transmit the one or more sidelink radio interface configuration parameters for the first UE (121) to the first BS (123); and/or
   - transmit the one or more sidelink radio interface configuration parameters for the second UE (131) to the second BS (133); and

   wherein the radio resources are located on a same carrier.

2. The network entity (110) of claim 1, wherein the processor (110a) is further configured to:

   control radio resources for sidelink transmission by the first UE (121) of the first PLMN (120) and/or the second UE (131) of the second PLMN (130); and/or perform dynamic and/or semi-persistent scheduling of sidelink transmissions by allocating one or more sidelink radio resources to a first UE (121) of the first PLMN (120) and/or to a second UE (131) of the second PLMN (130).

3. The network entity (110) according to claim 1 or 2, wherein the communication interface (110b) is configured to:

   - transmit scheduling information to the first BS (123), wherein the scheduling information specifies one or more sidelink radio resources allocated to the first UE (121) for transmission of sidelink control information and/or sidelink user data; and/or
   - transmit scheduling information to the second BS (133), wherein the scheduling information specifies one or more sidelink radio resources allocated to the second UE (131) for transmission of sidelink control information and/or sidelink user data.

4. The network entity (110) of claim 3, wherein the scheduling information comprises one or more of the following:

   - a carrier indicator;
   - a location of the one or more sidelink radio resources in the time domain;
   - a location of the one or more sidelink radio resources in the frequency domain;
   - a retransmission related parameter;
   - a semi-persistent scheduling, SPS, related parameter.

5. The network entity (110) of any one of claims 1 to 4, wherein the one or more RRC parameters controlling the operation of the MAC layer and/or the PHY layer for sidelink communication further comprise one or more of the following:

   - a radio resource pool configuration parameter;
   - a zone configuration parameter;
   - a radio resource selection configuration parameter;
   - a semi-persistent scheduling, SPS, configuration parameter;
   - a measurement configuration parameter.

6. The network entity (110) of any one of claims 1 to 5, wherein the communication interface (110b) is further configured to receive from the first BS (123) and/or from the second BS (133) one or more sidelink radio resource request parameters and/or one or more measurements.

7. The network entity (110) of claim 6, wherein the one or more sidelink radio resource request parameters comprise one or more of the following:

- a carrier frequency for transmitting and/or receiving by a UE (121, 131);
- a destination ID;
- a parameter for semi-persistent scheduling, SPS, in particular periodicity, timing offset, priority and/or message size;

and/or wherein the one or more measurements comprise one or more of the following:

- a geographic location of a UE (121, 131);
- a received signal strength in one or more radio resources;
- a sidelink buffer status.

8. A base station, BS (123, 133) of a public land mobile network, PLMN (120, 130), comprising a processor (133a) configured to process control plane information related to control of radio resources, in particular sidelink radio resources, and a communication interface (133b) configured to transmit and/or receive to/from a network entity (110), in particular a cloud server (110), said control plane information;

wherein the communication interface (133b) is configured to transmit to the network entity (110) one or more sidelink radio resource request parameters and/or one or more measurements; wherein the communication interface (133b) is further configured to receive from the network entity (110) one or more sidelink radio interface configuration parameters for a user equipment, UE (121, 131); wherein the one or more sidelink radio interface configuration parameters comprise one or more radio resource control, RRC, parameters controlling the operation of the medium access control, MAC, layer and/or the physical, PHY, layer for sidelink communication; and wherein the one or more RRC parameters controlling the operation of the MAC layer and/or the PHY layer for sidelink communication comprise configuration for enabling UE autonomous resource selection; and wherein the radio resources are located on a same carrier.

9. The base station (123, 133) of claim 8, wherein the one or more sidelink radio resource request parameters comprise one or more of the following:

- a carrier frequency for transmitting and/or receiving by the user equipment, UE (121, 131);
- a destination ID;
- a parameter for semi-persistent scheduling, in particular periodicity, timing offset, priority and/or message size;

and/or wherein the one or more measurements comprise one or more of the following:

- a geographic location of the UE (121, 131);
- a received signal strength in one or more radio resources;
- a sidelink buffer status.

**Patentansprüche**

1. Netzwerkentität (110), insbesondere ein Cloud-Server (110), umfassend einen Prozessor (110a), der dazu konfiguriert ist, Funkressourcen, insbesondere Sidelink-Funkressourcen, im Auftrag eines oder mehrerer, insbesondere zweier öffentlicher landgestützter Mobilfunknetze, PLMNs (120, 130), zu steuern; wobei der Prozessor (110a) dazu konfiguriert ist:

einen Wert eines oder mehrerer Konfigurationsparameter der Sidelink-Funkschnittstelle für ein erstes Benutzergerät, UE (121), eines ersten PLMN (120) und/oder für ein zweites UE (131) eines zweiten PLMN (130) festzulegen, wobei der eine oder die mehreren Konfigurationsparameter der Sidelink-Funkschnittstelle einen oder mehrere Parameter zur Funkressourcensteuerung, RRC-Parameter, umfassen, die den Betrieb der Schicht der Medienzugriffssteuerung, MAC-Schicht, und/oder der physischen Schicht, PHY-Schicht, zur Sidelink-Kommunikation steuern; und wobei der eine oder die mehreren RRC-Parameter, die den Betrieb der MAC-Schicht und/oder der PHY-Schicht zur Sidelink-Kommunikation steuern, eine Konfiguration zum Ermöglichen der autonomen Ressourcenauswahl des UE umfassen;

wobei die Netzwerkentität ferner eine Kommunikationsschnittstelle (110b) zur Kommunikation mit einer ersten Basisstation, BS (123), des ersten PLMN (120) und/oder einer zweiten BS (133) des zweiten PLMN (130) umfasst;

wobei die Kommunikationsschnittstelle (110b) dazu konfiguriert ist:

- den einen oder die mehreren Konfigurationsparameter der Sidelink-Funkschnittstelle für das erste UE (121) an die erste BS (123) zu übertragen; und/oder
- den einen oder die mehreren Konfigurationsparameter der Sidelink-Funkschnittstelle für die zweite UE (131) an die zweite BS (133) zu übertragen; und

wobei sich die Funkressourcen auf demselben Träger befinden.

2. Netzwerkentität (110) nach Anspruch 1, wobei der Prozessor (110a) ferner dazu konfiguriert ist:

Funkressourcen zur Sidelink-Übertragung durch das erste UE (121) des ersten PLMN (120) und/oder das zweite UE (131) des zweiten PLMN (130) zu steuern; und/oder
eine dynamische und/oder semi-persistente Planung von Sidelink-Übertragungen durch Zuweisen einer oder mehrerer Sidelink-Funkressourcen zu einem ersten UE (121) des ersten PLMN (120) und/oder zu einem zweiten UE (131) des zweiten PLMN (130) durchzuführen.

3. Netzwerkentität (110) nach Anspruch 1 oder 2, wobei die Kommunikationsschnittstelle (110b) dazu konfiguriert ist:

- Planungsinformationen an die erste BS (123) zu übertragen, wobei die Planungsinformationen eine oder mehrere Sidelink-Funkressourcen angeben, die dem ersten UE (121) zur Übertragung von Sidelink-Steuerinformationen und/oder Sidelink-Benutzerdaten zugewiesen sind; und/oder
- Planungsinformationen an die zweite BS (133) zu übertragen, wobei die Planungsinformationen eine oder mehrere Sidelink-Funkressourcen angeben, die dem zweiten UE (131) zur Übertragung von Sidelink-Steuerinformationen und/oder Sidelink-Benutzerdaten zugewiesen sind.

4. Netzwerkentität (110) nach Anspruch 3, wobei die Planungsinformationen eines oder mehrere der folgenden Elemente umfassen:

- einen Trägerindikator;
- einen Standort der einen oder der mehreren Sidelink-Funkressourcen in dem Zeitbereich;
- einen Standort der einen oder der mehreren Sidelink-Funkressourcen in dem Frequenzbereich;
- einen mit der Neuübertragung verbundenen Parameter;
- einen zu der semi-persistenten Planung, SPS, zugehörigen Parameter.

5. Netzwerkentität (110) nach einem der Ansprüche 1 bis 4, wobei der eine oder die mehreren RRC-Parameter, die den Betrieb der MAC-Schicht und/oder der PHY-Schicht zur Sidelink-Kommunikation steuern, ferner eines oder mehrere der folgenden Elemente umfassen:

- einen Konfigurationsparameter des Funkressourcenpools;
- einen Zonenkonfigurationsparameter;
- einen Konfigurationsparameter der Funkressourcenauswahl;
- einen Konfigurationsparameter der semi-persistenten Planung, SPS;
- einen Messkonfigurationsparameter.

6. Netzwerkentität (110) nach einem der Ansprüche 1 bis 5, wobei die Kommunikationsschnittstelle (110b) ferner dazu konfiguriert ist, aus der ersten BS (123) und/oder aus der zweiten BS (133) einen oder mehrere Parameter der Sidelink-Funkressourcenanforderung und/oder eine oder mehrere Messungen zu empfangen.

7. Netzwerkentität (110) nach Anspruch 6, wobei der eine oder die mehreren Parameter der Sidelink-Funkressourcenanforderung eines oder mehrere der folgenden Elemente umfassen:

- eine Trägerfrequenz zum Übertragen und/oder Empfangen durch ein UE (121, 131);
- eine Ziel-ID;
- einen Parameter zur semi-persistenten Planung, SPS, insbesondere Periodizität, Zeit-Offset, Priorität und/oder Nachrichtengröße;

und/oder wobei die eine oder die mehreren Messungen eine oder mehrere der folgenden Elemente umfassen:

- einen geografischen Standort eines UE (121, 131);
- eine empfangene Signalstärke in einer oder mehreren Funkressourcen;
- einen Sidelink-Pufferstatus.

8. Basisstation, BS (123, 133), eines öffentlichen landgestützten Mobilfunknetzes, PLMN (120, 130), umfassend eine Prozessor (133a), der dazu konfiguriert ist, Informationen der Steuerungsebenen in Bezug auf die Steuerung von Funkressourcen, insbesondere Sidelink-Funkressourcen, zu verarbeiten, und eine Kommunikationsschnittstelle (133b), die dazu konfiguriert ist, die Informationen der Steuerungsebenen an eine Netzwerkentität (110), insbesondere einen Cloud-Server (110), zu senden und/oder aus dieser zu empfangen;

wobei die Kommunikationsschnittstelle (133b) dazu konfiguriert ist, einen oder mehrere Parameter der Sidelink-Funkressourcenanforderung und/oder eine oder mehrere Messungen an die Netzwerkentität (110) zu übertragen;
wobei die Kommunikationsschnittstelle (133b) ferner dazu konfiguriert ist, einen oder mehrere Konfigurationsparameter der Sidelink-Funkschnittstellen für ein Benutzergerät, UE (121, 131), aus der Netzwerkentität (110) zu empfangen;
wobei der eine oder die mehreren Konfigurationsparameter der Sidelink-Funkschnittstelle einen oder mehrere Parameter der Funkressourcensteuerung, RRC-Parameter, umfassen, die den Betrieb der Schicht der Medienzugriffssteuerung, MAC-Schicht, und/oder der physischen Schicht, PHY-Schicht, zur Sidelink-Kommunikation steuern; und
wobei der eine oder die mehreren RRC-Parameter, die den Betrieb der MAC-Schicht und/oder der PHY-Schicht zur Sidelink-Kommunikation steuern, eine Konfiguration zum Ermöglichen der autonomen Ressourcenauswahl des UE umfassen; und
wobei sich die Funkressourcen auf demselben Träger befinden.

9. Basisstation (123, 133) nach Anspruch 8, wobei der eine oder die mehreren Parameter der Sidelink-Funkressourcenanforderung eines oder mehrere der folgenden Elemente umfassen:

- eine Trägerfrequenz zum Übertragen und/oder Empfangen durch das Benutzergerät, UE (121, 131);
- eine Ziel-ID;
- einen Parameter zur semi-persistenten Planung, insbesondere Periodizität, Zeit-Offset, Priorität und/oder Nachrichtengröße;

und/oder wobei die eine oder die mehreren Messungen eine oder mehrere der folgenden Elemente umfassen:

- einen geografischen Standort des UE (121, 131);
- eine empfangene Signalstärke in einer oder mehreren Funkressourcen;
- einen Sidelink-Pufferstatus.

## Revendications

1. Entité de réseau (110), en particulier un serveur en nuage (110), comprenant un processeur (110a) étant configuré pour commander des ressources radio, en particulier des ressources radio sidelink, pour le compte d'un ou plusieurs, en particulier deux, réseaux mobiles terrestres publics, PLMN (120, 130) ;
dans laquelle le processeur (110a) est configuré pour :

définir une valeur d'un ou plusieurs paramètres de configuration d'interface radio sidelink pour un premier équipement utilisateur, UE (121) d'un premier PLMN (120) et/ou pour un second UE (131) d'un second PLMN (130), dans laquelle les un ou plusieurs paramètres de configuration d'interface radio sidelink comprennent un ou plusieurs paramètres de commande de ressources radio, RRC, commandant le fonctionnement de la couche de commande d'accès au support, MAC, et/ou de la couche physique, PHY, pour la communication sidelink ; et dans laquelle les un ou plusieurs paramètres RRC commandant le fonctionnement de la couche MAC et/ou de la couche PHY pour la communication sidelink comprennent la configuration pour permettre la sélection autonome de ressources de l'UE ;

dans laquelle l'entité de réseau comprend également une interface de communication (110b) pour communiquer avec une première station de base, BS (123) du premier PLMN (120) et/ou une seconde BS (133) du second PLMN (130) ;

dans laquelle l'interface de communication (110b) est configurée pour :

- transmettre les un ou plusieurs paramètres de configuration d'interface radio sidelink pour le premier UE (121) à la première BS (123) ; et/ou
- transmettre les un ou plusieurs paramètres de configuration d'interface radio sidelink pour le second UE (131) à la seconde BS (133) ; et

dans laquelle les ressources radio sont situées sur une même porteuse.

2. Entité de réseau (110) selon la revendication 1, dans laquelle le processeur (110a) est également configuré pour :

commander des ressources radio pour la transmission sidelink par le premier UE (121) du premier PLMN (120) et/ou le second UE (131) du second PLMN (130) ; et/ou

réaliser une planification dynamique et/ou semi-persistante de transmissions sidelink en allouant une ou plusieurs ressources radio sidelink à un premier UE (121) du premier PLMN (120) et/ou à un second UE (131) du second PLMN (130).

3. Entité de réseau (110) selon la revendication 1 ou 2, dans laquelle l'interface de communication (110b) est configurée pour :

- transmettre des informations de planification à la première BS (123), dans laquelle les informations de planification spécifient une ou plusieurs ressources radio sidelink allouées au premier UE (121) pour la transmission d'informations de commande sidelink et/ou de données utilisateur sidelink ; et/ou
- transmettre des informations de planification à la première BS (133), dans laquelle les informations de planification spécifient une ou plusieurs ressources radio sidelink allouées au second UE (131) pour la transmission d'informations de commande sidelink et/ou de données utilisateur sidelink.

4. Entité de réseau (110) selon la revendication 3, dans laquelle les informations de planification comprennent l'un ou plusieurs des éléments suivants :

- un indicateur de porteuse ;
- un emplacement des une ou plusieurs ressources radio sidelink dans le domaine temporel ;
- un emplacement des une ou plusieurs ressources radio sidelink dans le domaine fréquentiel ;
- un paramètre lié à la retransmission ;
- un paramètre lié à la planification semi-persistante, SPS.

5. Entité de réseau (110) selon l'une quelconque des revendications 1 à 4, dans laquelle les un ou plusieurs paramètres RRC commandant le fonctionnement de la couche MAC et/ou de la couche PHY pour la communication sidelink comprennent également l'un ou plusieurs des éléments suivants :

- un paramètre de configuration du pool de ressources radio ;
- un paramètre de configuration de zone ;
- un paramètre de configuration de sélection de ressources radio ;
- un paramètre de configuration de planification semi-persistante, SPS ;
- un paramètre de configuration de mesure.

6. Entité de réseau (110) selon l'une quelconque des revendications 1 à 5, dans laquelle l'interface de communication (110b) est également configurée pour recevoir de la première BS (123) et/ou de la seconde BS (133) un ou plusieurs paramètres de demande de ressources radio sidelink et/ou une ou plusieurs mesures.

**7.** Entité de réseau (110) selon la revendication 6, dans laquelle les un ou plusieurs paramètres de demande de ressources radio sidelink comprennent l'un ou plusieurs des éléments suivants :

- une fréquence porteuse pour la transmission et/ou la réception par un UE (121, 131) ;
- un identifiant de destination ;
- un paramètre pour la planification semi-persistante, SPS, en particulier la périodicité, le décalage temporel, la priorité et/ou la taille de message ;

et/ou dans laquelle les une ou plusieurs mesures comprennent l'un ou plusieurs des éléments suivants :

- un emplacement géographique d'un UE (121, 131) ;
- une intensité de signal reçue dans une ou plusieurs ressources radio ;
- un état de tampon sidelink.

**8.** Station de base, BS (123, 133) d'un réseau mobile terrestre public, PLMN (120, 130), comprenant un processeur (133a) configuré pour traiter des informations de plan de commande liées à la commande de ressources radio, en particulier de ressources radio sidelink, et une interface de communication (133b) configurée pour transmettre et/ou recevoir vers/depuis une entité de réseau (110), en particulier un serveur en nuage (110), lesdites informations de plan de commande ;

dans laquelle l'interface de communication (133b) est configurée pour transmettre à l'entité de réseau (110) un ou plusieurs paramètres de demande de ressources radio sidelink et/ou une ou plusieurs mesures ;
dans laquelle l'interface de communication (133b) est également configurée pour recevoir de l'entité de réseau (110) un ou plusieurs paramètres de configuration d'interface radio sidelink pour un équipement utilisateur, UE (121, 131) ;
dans laquelle les un ou plusieurs paramètres de configuration d'interface radio sidelink comprennent un ou plusieurs paramètres de commande de ressources radio, RRC, commandant le fonctionnement de la couche de commande d'accès au support, MAC, et/ou de la couche physique, PHY, pour la communication sidelink ; et
dans laquelle les un ou plusieurs paramètres RRC commandant le fonctionnement de la couche MAC et/ou de la couche PHY pour la communication sidelink comprennent la configuration permettant la sélection autonome de ressources de l'UE ; et
dans laquelle les ressources radio sont situées sur une même porteuse.

**9.** Station de base (123, 133) selon la revendication 8, dans laquelle les un ou plusieurs paramètres de demande de ressources radio sidelink comprennent l'un ou plusieurs des éléments suivants :

- une fréquence porteuse pour la transmission et/ou la réception par l'équipement utilisateur, UE (121, 131) ;
- un identifiant de destination ;
- un paramètre pour la planification semi-persistante, en particulier la périodicité, le décalage temporel, la priorité et/ou la taille de message ;

et/ou dans laquelle les une ou plusieurs mesures comprennent l'un ou plusieurs des éléments suivants :

- un emplacement géographique de l'UE (121, 131) ;
- une intensité de signal reçue dans une ou plusieurs ressources radio ;
- un état de tampon sidelink.

Fig. 1

EP 3 622 776 B1

Fig. 2

Fig. 3

**EP 3 622 776 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017052690 A1

**Non-patent literature cited in the description**

- LTE; Evolved Universal Terrestrial Radio Access (E-UTRA); Radio Resource Control (RRC); Protocol specification. *3GPP TS 36.331*